# FASCICULE DE BREVET EUROPEEN

(11) **EP 2 760 616 B1**
(45) Date de publication et mention de la délivrance du brevet: **06.04.2016**
(21) Numéro de dépôt: 12775772.2
(22) Date de dépôt: 27.09.2012
(51) Int. Cl.: B23K 9/09, B23P 6/04, F01D 25/24, B23K 9/04, B23K 26/34

(54) **PROCEDE DE SOUDAGE ET DE RECHARGEMENT DE PIECES METALLIQUES EN ALUMINIUM PAR UN PROCEDE MIG AVEC COURANT ET FIL D'APPORT PULSES**
VERFAHREN ZUM AUFTRAGSCHWEISSEN AUF METALLISCHE BAUTEILE AUS ALUMINIUM MITTELS DES MIG-VERFAHRENS MIT GEPULSTER STROM- UND MATERIALZUFUHR
BUILD UP WELDING METHOD FOR METAL PIECES OF ALUMINIUM BY PULSED CURRENT AND PULSED WELDING MATERIAL FEEDING MIG WELDING

(30) Priorité: 27.09.2011 FR 1158622
(43) Date de publication de la demande: 06.08.2014
(73) Titulaire: SNECMA, 75015 Paris (FR); Centre National de la Recherche Scientifique (CNRS), 75794 Paris Cedex 16 (FR); Université Paris Sud (UPS), 91405 Orsay Cedex (FR); Université de Nantes, 44035 Nantes Cedex 1 (FR)
(72) Inventeur: MOTTIN, Jean-Baptiste, 77550 Moissy-cramayel Cedex (FR); CASTAGNE, Jean-François, 77550 Moissy-cramayel Cedex (FR); BAUDIN, Thierry, 91190 Gif Sur Yvette (FR); BENOIT, Alexandre Yann Michel, 44300 Nantes (FR); PAILLARD, Pascal, 44850 Ligne (FR)
(74) Mandataire: Camus, Olivier Jean-Claude
(86) Numéro de dépôt international: PCT/FR2012/052184
(87) Numéro de publication internationale: WO 2013/045844

(56) Documents cités:
- EP-A1- 1 955 804
- EP-A1- 1 961 513
- WO-A1-2009/144301

## Description

La présente invention concerne un procédé de rechargement de pièces métalliques en aluminium au moyen d'un procédé MIG (pour Metal Inert Gaz), du type connu du document WO-A-2009/144301.

L'invention trouve une application particulièrement intéressante dans le domaine de la reconstruction de pièces métalliques en aluminium d'une turbomachine et dans le soudage de pièces métalliques en aluminium par rechargement de métal d'apport.

Plus particulièrement, le procédé de rechargement selon l'invention est avantageusement utilisé pour la réparation de brides de fixation d'un carter de rétention de turbomachine par rechargement de matière de manière à créer un volume de matière discontinu.

La création d'un volume de matière discontinu est actuellement obtenue par des procédés tels que la forge, la fonderie, ou encore par le soudage de deux pièces. Toutefois, ces procédés sont relativement coûteux et non adaptés pour des petites séries et encore pour des pièces de géométrie complexe.

On connaît également le soudage de type TIG (pour Tungsten Inert Gaz en langue anglaise) qui est un procédé de soudage à l'arc avec une électrode non fusible, sous atmosphère gazeuse. Cette technique peut être utilisée avec du métal d'apport notamment pour la construction ou le rechargement de pièces métalliques.

Toutefois, l'aluminium étant un matériau difficilement soudable et de haute conductivité thermique, la construction ou le rechargement de pièces métalliques en aluminium, telles que par exemple des brides de fixation de carter de rétention, par soudage TIG affecte thermiquement de façon trop sévère les zones alentours, et notamment la peau du carter lors de la réparation de brides de fixation de carter de rétention, ce qui entraîne une diminution importante des caractéristiques mécaniques des zones affectées. Par conséquent, ce procédé TIG de rechargement n'est pas acceptable et présente de nombreux inconvénients car il diminue les caractéristiques mécaniques des pièces métalliques réparées. Ainsi, lors de la réparation d'une bride de fixation d'un carter de rétention, celui-ci voit sa capacité de rétention d'objets projetés diminuée de fait de cette diminution des caractéristiques mécaniques de la peau du carter par l'utilisation d'un procédé TIG.

Il a alors été proposé un procédé de construction d'une partie de pièce métallique par un procédé MIG à courant et à fil pulsés permettant de réaliser des cordons de métal d'apport de grande section (notamment supérieure à 25mm²) tout en minimisant la zone d'affectation thermique de la pièce et donc sa fragilisation.

Ce procédé MIG à courant et à fil pulsés qui est un perfectionnement du procédé de soudage appelé CMT (Cold Metal Transfert, en langue anglaise) est décrit de façon plus détaillée dans la demande de brevet FR2931714.

Cependant, il est bien connu que le soudage des alliages d'aluminium peut occasionner un phénomène de fissuration à chaud. Ces fissures apparaissent typiquement à la fin de la solidification de la zone fondue, lorsque cette dernière est à l'état semi-solide. Les fissures sont causées par les contraintes occasionnées par le refroidissement et le bridage des pièces. Ce phénomène étant directement lié à la composition du métal d'apport, il est connu d'utiliser un métal d'apport de composition spécifique et différente de la composition de la pièce à recharger ou à souder.

Ainsi, à titre d'exemple, pour la réalisation d'un rechargement d'une pièce métallique en alliage d'aluminium de composition 6061, il est commun d'utiliser un métal en alliage d'aluminium de composition 4043 ou encore de composition 5356.

Cependant, l'utilisation de métal d'apport de composition spécifique et différente de la pièce à réparer ne permet pas de retrouver des caractéristiques mécaniques identiques à la pièce d'origine, par exemple en alliage d'aluminium 6061, puisque les caractéristiques mécaniques de la composition d'alliage du métal d'apport sont inférieures aux caractéristiques mécaniques de la composition d'alliage de la pièce à réparer.

La pièce rechargée a donc par conséquent une résistance et une durée de vie réduite par rapport à la pièce d'origine.

Dans ce contexte, l'invention vise à fournir un procédé de rechargement de pièces métalliques en aluminium par un procédé MIG avec courant et fil d'apport pulsés permettant d'améliorer les caractéristiques mécaniques de la pièce réparée, proposant des caractéristiques mécaniques de la partie rechargée comparables aux caractéristiques mécaniques de la pièce d'origine.

A cette fin, l'invention propose un procédé de rechargement de pièces métalliques en aluminium de turbomachine au moyen d'un appareillage de soudage MIG comportant un générateur de courant pulsé et un débit de fil de métal d'apport pulsé, ledit procédé étant caractérisé en ce que ledit rechargement est réalisé au moyen d'un fil de métal d'apport dont la composition est de même nature que la composition de l'alliage d'aluminium de ladite pièce à recharger, ledit débit de fil de métal pulsé et la vitesse de rechargement de ladite pièce métallique de turbomachine étant adaptés de manière à réaliser un rechargement sans fissuration à chaud.

Ainsi, le procédé selon l'invention permet d'effectuer un rechargement homogène (i.e. avec un métal d'apport de même nuance que l'alliage d'aluminium de base) sur une pièce métallique d'aluminium avec des paramètres de rechargement contrôlés tout en réalisant un rechargement dans un domaine de travail excluant les risques de fissuration à chaud.

De plus, l'utilisation d'un procédé parfaitement contrôlable comme le procédé MIG permet de faciliter la répétabilité de réalisation des conditions de rechargement de matière homogène et par conséquent d'assurer une absence de fissuration à chaud de façon répétable.

Le procédé particulier selon l'invention a également pour avantage de pouvoir déposer des volumes de matière importants tout en minimisant la zone d'affectation thermique de la pièce et donc sa fragilisation. Ainsi, le procédé selon l'invention peut être utilisé avantageusement pour le rechargement ou le soudage de pièces de faible épaisseur.

Avantageusement, le procédé de rechargement selon l'invention est complété avec une étape de traitement thermique post-rechargement de manière à améliorer les caractéristiques mécaniques de la partie rechargée. Grâce au traitement thermique, la pièce rechargée comporte des caractéristiques mécaniques sensiblement identiques à la pièce d'origine.

Le cycle thermique a pour objectif de dissoudre les précipités (recuit de mise en solution) puis de les refaire précipiter de façon homogène et contrôlée (revenu de précipitation) de manière à améliorer la tenue mécanique de la partie rechargée.

Le procédé de rechargement selon l'invention est destiné aussi bien à la construction d'un volume de matière sur un substrat (i.e. sur une pièce d'origine) qu'au soudage de deux pièces au moyen du métal d'apport de même nuance que les deux pièces d'origine.

Le procédé de rechargement de pièces métalliques en aluminium de turbomachine au moyen d'un appareillage de soudage MIG comportant un générateur de courant pulsé et un débit de fil de métal d'apport pulsé selon l'invention peut également présenter une ou plusieurs des caractéristiques ci-dessous, considérées individuellement ou selon toutes les combinaisons techniquement possibles :
- le procédé comporte une étape de traitement thermique ;
- pour la reconstruction d'une partie d'une pièce métallique en alliage d'aluminium de nuance 6061, la vitesse de rechargement est comprise entre 50 cm/min et 120 cm/min ;
- pour le soudage de pièces métalliques en alliage d'aluminium de nuance 6061 avec rechargement de métal d'aport, la vitesse de soudage est comprise entre 40 cm/min et 100 cm/min ;
- ledit procédé comporte une étape de traitement thermique du métal rechargé de manière à optimiser les caractéristiques mécaniques de la pièce rechargée ;
- ledit traitement thermique consiste en :
   - une première sous-étape de remise en solution :
   - une deuxième sous-étape d'hypertrempe :
   - une troisième sous-étape de revenu.

L'invention a également pour objet un procédé de réparation d'un carter de rétention de turbomachine comportant au moins une bride de fixation à réparer comportant successivement :
- une étape d'arasage de la bride de fixation à réparer :
- une étape de reconstruction de ladite bride de fixation par un procédé de rechargement selon l'invention ;
- une étape d'usinage dudit métal rechargé de façon à réaliser une géométrie finale de ladite bride de fixation.

Grâce au procédé selon l'invention, il est possible de réparer un carter de rétention d'un rotor de turbomachine de façon simple, rapide, et en garantissant des propriétés mécaniques identiques au carter d'origine au moyen d'un procédé de reconstruction de matière par soudage MIG reconstruisant une bride à partir de la surface arasée de la bride du carter.

Ce procédé permet ainsi d'apporter une réelle solution de réparation des carters de rétention de turbomachine en garantissant leur capacité de rétention après réparation de façon durable et équivalente aux carters de rétention d'origine par l'utilisation d'un métal d'apport de nuance ou de composition identique à la pièce d'origine.

En effet, l'utilisation du procédé de reconstruction de matière par soudage MIG permet, de plus, de réduire par trois la taille de la Zone Affectée Thermiquement (ZAT) par rapport à un procédé de soudage à l'arc classique, ce qui permet ainsi d'effectuer une reconstruction d'une bride de carter de rétention sans dégrader la résistance de la peau du carter et sans affecter les épaisseurs de peau qui sont certifiées lors de la conception du carter pour la rétention.

Ce procédé permet également de s'affranchir des coûts de remplacement d'un tel carter de rétention.

D'autres caractéristiques et avantages de l'invention ressortiront plus clairement de la description qui en est donnée ci-dessous, à titre indicatif et nullement limitatif, en référence aux figures annexées, parmi lesquelles :
- la figure 1 est une vue schématique d'une turbomachine aéronautique ;
- la figure 2 est une vue partielle en coupe d'un carter de rétention de turbomachine nécessitant une réparation ;
- la figure 3 est un schéma synoptique présentant les principales étapes d'un exemple de procédé de rechargement selon l'invention appliquée à la réparation d'un carter de rétention de turbomachine selon l'invention ;
- la figure 4 est une vue partielle en coupe d'un carter de rétention de turbomachine lors de la première étape du procédé illustré en figure 3 ;
- la figure 5 est une vue partielle en coupe d'un carter de rétention de turbomachine lors de la troisième étape du procédé illustré en figure 3 ;
- la figure 6 est un graphique illustrant un exemple de paramètres de soudage pour la réalisation d'un rechargement de matière avec le procédé de rechargement selon l'invention :
- la figure 7 est un graphique illustrant un exemple de paramètres de soudage pour la réalisation d'un soudage avec métal d'apport avec le procédé de rechargement selon l'invention.

Dans toutes les figures, les éléments communs portent les mêmes numéros de référence sauf précision contraire.

Le procédé de rechargement, selon l'invention, trouve une application particulièrement intéressante dans le domaine de la réparation des brides de carter de rétention d'une soufflante de turbomachine.

Ainsi, un exemple de mise en oeuvre du procédé de rechargement selon l'invention va être décrit ci-dessous pour la réparation d'une bride d'un carter de rétention d'une turbomachine.

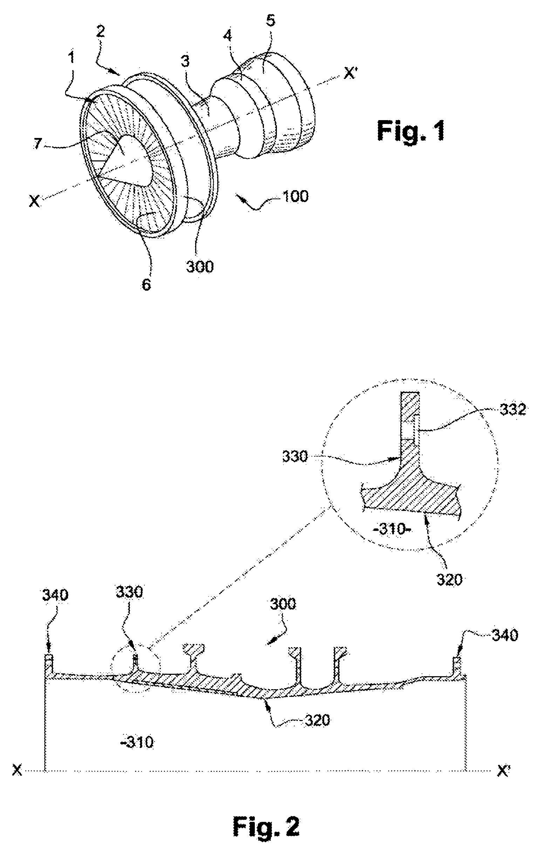

La figure 1 est une vue très schématique d'une turbomachine aéronautique comportant de l'amont vers l'aval, dans le sens de l'écoulement du flux gazeux, une soufflante 1 disposée en entrée de la turbomachine 100, un compresseur 2, une chambre de combustion 3, une turbine haute-pression 4 et une turbine basse pression 5. La soufflante 1 se compose d'un arbre rotatif 7 sur lequel est montée une pluralité d'aubes 6.

La turbomachine 100 comporte un carter de rétention 300 entourant circonférentiellement la soufflante 1, le carter de rétention 300 étant apte à retenir d'éventuels corps étrangers projetés radialement par centrifugation lors de la rotation des aubes 6. En effet, lors du fonctionnement de la turbomachine 100, des corps étrangers à la turbomachine 100, comme par exemple de la glace, peuvent être ingérés par la soufflante 1 puis projetés radialement sous l'effet de la force centrifuge de rotation.

Le carter de rétention 300 est illustré plus précisément à la figure 2.

La surface interne 320 du carter de rétention 300 définit la veine d'entrée d'air 310 de la turbomachine 100. Le carter de rétention 300 comporte à ses extrémités des brides externes 340 permettant son montage et sa liaison avec d'autres éléments de la turbomachine 100. Entre les brides extrêmes 340 situées aux extrémités du carter 300, le carter 300 présente une épaisseur variable avec une partie centrale de plus forte épaisseur que les parties extrêmes. L'épaisseur de peau du carter 300 conditionne sa capacité de rétention. Classiquement, le carter de rétention est réalisé dans un alliage d'aluminium, par exemple de type 6061.

Le carter de rétention 300 comporte également une pluralité de brides externes intermédiaires 330 situées entre des brides 340 d'extrémités. Les brides intermédiaires 330 sont également réparties sur le pourtour périphérique du carter 300, généralement de façon sensiblement radiale, et permettent la fixation de divers équipements ou supports d'équipements tels que des canalisations, des harnais, etc.

Au cours de la vie de la turbomachine, il peut arriver que les différents supports d'équipements se desserrent légèrement et conduisent à une usure et/ou à une ovalisation prématurée des orifices de fixation 332 des brides intermédiaires 330. Lorsque la zone endommagée est trop importante, les brides 330 n'assurent plus leur fonction et il est alors nécessaire de les réparer.

Dans la présente description, la bride intermédiaire 330 sera indifféremment nommée bride ou encore bride de fixation.

Préalablement au rechargement de matière sur le carter, il est nécessaire de préparer la bride à réparer.

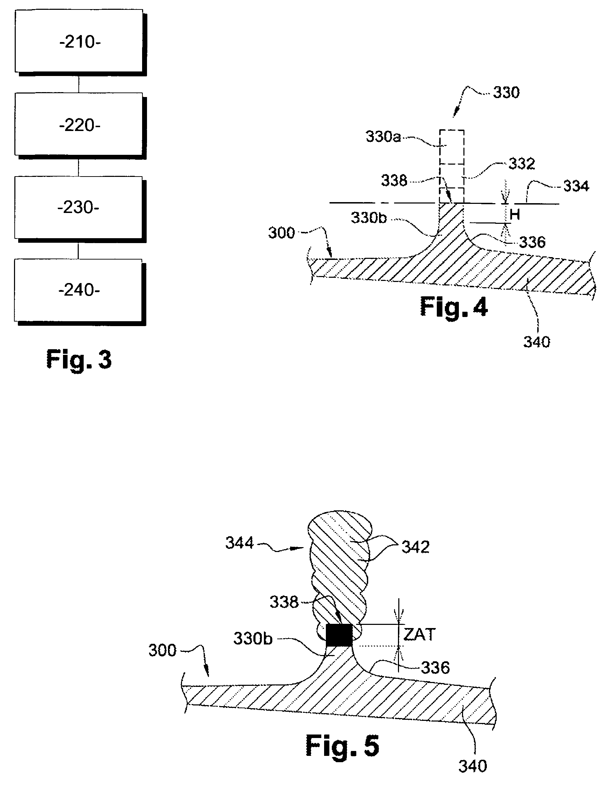

Pour cela la première étape 210 du procédé 200, illustré à la figure 3, est une étape d'arasage d'une partie plus au moins partielle de la bride 330 usagée, la partie arasée étant principalement déterminée en fonction de l'état d'usure de la bride 330 et de la zone de propagation de l'usure.

Cette étape est particulièrement illustrée à la figure 4 sur laquelle la section d'arasage est illustrée, à titre d'exemple, par la ligne horizontale 334 séparant la bride 330 en une partie supérieure 330a et une partie inférieure 330b, la partie supérieure 330a de la bride 330 usée étant usinée lors de cette première étape.

La deuxième étape 220 du procédé 200 est une étape de préparation de la surface 338 de la partie restante de la bride 330 en vue de son rechargement de matière. Cette étape de préparation de la surface consiste par exemple en un usinage mécanique, et/ou en un nettoyage chimique, par exemple par alcool, etc.

La troisième étape 230 du procédé 200 selon l'invention est une étape de reconstruction de la partie supérieure 330a de la bride 330 par un rechargement massif de matière (ou de métal d'apport), au moyen d'un procédé de soudage par arc du type MIG (pour « Metal Inert Gaz ») à courant pulsé et à débit de fil d'apport pulsé. Cette troisième étape 230 du procédé de réparation 200 est représentée plus particulièrement à la figure 5. En effet, la figure 5 illustre une vue en coupe de la bride 330 après l'étape de rechargement de matière.

Le rechargement de matière est réalisé par superposition de cordons de matière métallique 342 (ou de métal d'apport), de sections importantes, sur la surface 338 de la partie inférieure 330b de la bride 330. Le nombre de passes, c'est-à-dire le nombre de cordons de matière 342 à appliquer, est déterminé en fonction de la hauteur de matière désirée ainsi que de la largeur des cordons définis.

Le procédé de soudage MIG permet de construire ou de reconstruire des parties de pièces grâce à un taux de dépôt important sous la forme de cordons de sections importantes. La longueur et la largeur des cordons du rechargement sont définies par l'opérateur en fonction du débit du fil.

Le métal d'apport utilisé est un métal d'apport de nuance d'alliage d'aluminium identique à l'alliage d'aluminium du carter de rétention (i.e. alliage d'aluminium de nuance 6061).

Le procédé de rechargement par soudage MIG permet de travailler à des températures plus froides que les températures de travail des autres procédés à l'arc. Ainsi, le procédé selon l'invention favorise le refroidissement rapide du cordon et induit par conséquent un faible temps de maintien dans l'intervalle de fragilité (BTR pour Brittle Temperature Range en langue anglaise) se situant entre 582°C et 652°C pour l'alliage d'aluminium 6061.

Ainsi, le cycle thermique particulier du procédé selon l'invention permet de générer une microstructure particulière plus fine que celle rencontrée avec d'autres procédé de soudage, notamment en surface de cordons 342 permettant d'éviter, en travaillant avec des paramètres adaptés décrits ci-dessous, le phénomène de fissuration à chaud.

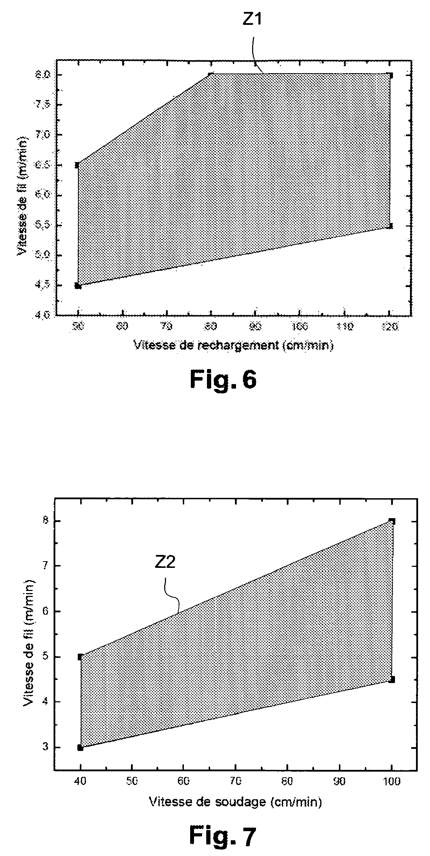

Selon un exemple de réalisation avantageux de l'invention, la plage paramétrique du procédé selon l'invention pour réaliser un rechargement de matière (i.e. une reconstruction de matière) à partir d'un fil de métal d'apport d'alliage 6061, de diamètre 1,2mm est définie par la zone grisée Z1 du graphique illustré à la figure 6.

Ainsi, la vitesse de rechargement est comprise entre 50 cm/min et 120 cm/min, avec par exemple pour une vitesse de rechargement de 50cm/min, une vitesse de fil comprise entre 4,5 m/min et 6,5m/min et pour une vitesse de rechargement de 120 cm/min, une vitesse de fil comprise entre 5,5 m/min et 8 m/min.

Selon un autre exemple de réalisation de l'invention, la plage paramétrique du procédé selon l'invention pour effectuer un soudage avec métal d'apport d'alliage 6061, de diamètre 1,2 mm, est définie par la zone grisée Z2 du graphique illustré à la figure 7.

Ainsi, la vitesse de soudage est comprise entre 40 cm/min et 100 cm/min, avec une vitesse de fil comprise entre 3 m/min et 5 m/min pour une vitesse de soudage de 40cm/min et avec une vitesse de fil comprise entre 4,5 m/min et 8 m/min pour une vitesse de soudage de 100 cm/min.

Ces plages paramétriques sont données à titre d'exemple pour un alliage d'aluminium de nuance donnée, un diamètre de fil donné et une température ambiante donnée. Il est entendu que les plages paramétriques décrites peuvent légèrement varier en fonction du diamètre du fil, de la température ambiante et de la nuance d'aluminium utilisée.

Toutefois, il peut arriver que des retassures de fin de cordons de tailles variables soient toujours présentes. En revanche, elles sont exclusivement situées dans la partie finale du cordon de la zone rechargée qui sera par la suite usinée de manière à donner la géométrie finale de la bride de fixation 330.

Le procédé de rechargement comporte également une quatrième étape 240 optionnelle de traitement thermique. Le traitement thermique est par exemple pour l'alliage 6061 un traitement thermique, de type T6 dans la classification internationale, consistant en une remise en solution (20min à 530°C), suivie par une hypertrempe puis d'un revenu de 8 heures à 175°C.

Le traitement thermique permet ainsi à la pièce rechargée (i.e. la bride) d'avoir des caractéristiques mécaniques identiques à la pièce d'origine.

Le procédé de rechargement selon l'invention a été décrit principalement pour une utilisation de type rechargement d'une bride de carter de rétention de turbomachine. Toutefois, l'invention n'est pas limitée à ce mode de réalisation. A titre d'exemple, le procédé selon l'invention pourrait également être utilisé pour réaliser le soudage avec un métal d'apport de plusieurs sections d'un carter de rétention. Dans ce mode de réalisation particulier de l'invention, les plages paramétriques de soudage illustrées à la figure 7 seraient utilisées.

## Revendications

1. Procédé de rechargement de pièces métalliques en aluminium de turbomachine au moyen d'un appareillage de soudage MIG comportant un générateur de courant pulsé et un débit de fil de métal d'apport pulsé, ledit procédé étant **caractérisé en ce que** ledit rechargement est réalisé au moyen d'un fil de métal d'apport dont la composition est de même nature que la composition de l'alliage d'aluminium de ladite pièce à recharger, ledit débit de fil de métal pulsé et la vitesse de rechargement de ladite pièce métallique de turbomachine étant adaptés de manière à réaliser un rechargement sans fissuration à chaud.

2. Procédé de rechargement selon la revendication précédente **caractérisé en ce qu'**il comporte une étape de traitement thermique.

3. Procédé de rechargement selon l'une des revendications 1 à 2 **caractérisé en ce que** pour la reconstruction d'une partie d'une pièce métallique (330) en alliage d'aluminium de nuance 6061, la vitesse de rechargement est comprise entre 50 cm/min et 120 cm/min.

4. Procédé de rechargement selon l'une des revendications 1 à 2 **caractérisé en ce que** pour le soudage de pièces métalliques en alliage d'aluminium de nuance 6061 avec rechargement de métal d'apport, la vitesse de soudage est comprise entre 40 cm/min et 100 cm/min.

5. Procédé de rechargement selon l'une des revendications précédentes **caractérisé en ce que** ledit procédé comporte une étape de traitement thermique du métal rechargé de manière à optimiser les caractéristiques mécaniques de la pièce rechargée.

6. Procédé de rechargement selon la revendication précédente **caractérisé en ce que** ledit traitement thermique consiste en :
- une première sous-étape de remise en solution :
- une deuxième sous-étape d'hypertrempe :
- une troisième sous-étape de revenu.

7. Procédé de réparation (200) d'un carter de rétention (300) de turbomachine (100) comportant au moins une bride de fixation (330) à réparer, ledit procédé (200) comportant successivement :
- une étape (210) d'arasage de la bride de fixation (330) à réparer :
- une étape (230) de reconstruction de ladite bride de fixation (330) par un procédé de rechargement selon l'une des revendications 1 à6;
- une étape d'usinage dudit métal rechargé de façon à réaliser une géométrie finale de ladite bride de fixation.

## Patentansprüche

1. Nachladeverfahren für Metallstücke aus Aluminium aus einer Turbomaschine anhand eines MIG-Schweißgeräts, umfassend einen Generator für pulsierenden Gleichstrom und einen pulsierenden Schweißdrahtdurchsatz, wobei das genannte Verfahren **dadurch gekennzeichnet ist, dass** das genannte Nachladen anhand eines Schweißdrahtes realisiert ist, dessen Zusammensetzung von derselben Art ist wie die Zusammensetzung der Aluminiumlegierung des genannten nachzuladenden Teils, wobei der genannte pulsierende Schweißdrahtdurchsatz und die Nachladegeschwindigkeit des genannten Metallstücks der Turbomaschine derart angepasst sind, dass ein Nachladen ohne Rissbildung unter Hitzeeinwirkung realisiert wird.

2. Nachladeverfahren gemäß dem voranstehenden Anspruch, **dadurch gekennzeichnet, dass** es eine Wärmebehandlungsstufe umfasst.

3. Nachladeverfahren gemäß Anspruch 1 bis 2, **dadurch gekennzeichnet, dass** für den Wiederaufbau eines Teils eines Metallstücks (330) aus einer Aluminiumlegierung der Nuance 6061 die Nachladegeschwindigkeit zwischen 50 cm/Min. und 120 cm/Min. inbegriffen ist.

4. Nachladeverfahren gemäß Anspruch 1 bis 2, **dadurch gekennzeichnet, dass** für das Schweißen von Metallstücken aus Aluminiumlegierung der Nuance 6061 mit Nachladen von Schweißmetall die Schweißgeschwindigkeit zwischen 40 cm/Min. und 100 cm/Min. inbegriffen ist.

5. Nachladeverfahren gemäß einem der voranstehenden Ansprüche, **dadurch gekennzeichnet, dass** das genannte Verfahren eine Wärmebehandlungsstufe des nachgeladenen Metalls derart umfasst, dass die mechanischen Merkmale des geladenen Stücks optimiert werden.

6. Nachladeverfahren gemäß dem voranstehenden Anspruch, **dadurch gekennzeichnet, dass** die genannte Wärmebehandlung besteht aus:
- einer ersten Unter-Stufe der Übergabe in eine Lösung,
- einer zweiten Unterstufe zum Abschrecken,
- einer dritten Unterstufe zum Anlassen.

7. Reparaturverfahren (200) eines Rückhaltegehäuses (300) einer Turbomaschine (100), umfassend wenigstens einen Befestigungsflansch (330) zum Reparieren, wobei das genannte Verfahren (200) sukzessive umfasst:
- eine Abgleichstufe (210) des Befestigungsflansches (330) zum Reparieren;
- eine Wiederaufbaustufe (230) des genannten Befestigungsflansches (330) durch ein Nachladeverfahren gemäß Anspruch 1 bis 6;
- eine Bearbeitungsstufe des genannten nachgeladenen Metalls derart, dass eine endgültige Geometrie des genannten Befestigungsflansches realisiert wird.

## Claims

1. Method for building up metal turbomachine components made of aluminium using a MIG welding apparatus comprising a pulsed-current generator and a pulsed feed of metal filler wire, said method being **characterized in that** said building up is performed using a metal filler wire the composition of which is of the same nature as the composition of the aluminium alloy of said component being built up, said pulsed feed of metal wire and the rate at which said metal turbomachine component is built up being adapted in such a way as to achieve build up without cracking in the hot state.

2. Method for building up according to the preceding claim **characterised in that** it comprises a step of heat treatment.

3. Method for building up according to one of claims 1 to 2 **characterised in that** for the reconstruction of a part of a metal component (330) made of 6061 grade aluminium alloy, the build up rate is comprised between 50 cm/min and 120 cm/min.

4. Method for building up according to one of claims 1 to 2 **characterised in that** for the welding of metal components made of 6061 grade aluminium alloy with build up of metal filler, the welding rate is comprised between 40 cm/min and 100 cm/min.

5. Method for building up according to one of the preceding claims **characterised in that** said method comprises a step of heat treatment of the built up metal in such a way as to optimise the mechanical characteristics of the built up component.

6. Method for building up according to the preceding claim **characterised in that** said heat treatment consists in:
- a first sub-step of solution heat treatment;
- a second sub-step of rapid quenching;
- a third sub-step of tempering.

7. Method for repairing (200) a retention housing (300) of a turbomachine (100) comprising at least one mounting flange (330) to be repaired, said method (200) successively comprising:
- a step (210) of shaving the mounting flange (330) to be repaired;
- a step (230) of reconstructing said mounting flange (330) by a method for building up according to one of claims 1 to 6;
- a step of machining said built up metal so as to produce a final geometry of said mounting flange.
